# EUROPÄISCHE PATENTSCHRIFT

(11) **EP 2 151 762 B1**
(45) Veröffentlichungstag und Bekanntmachung des Hinweises auf die Patenterteilung: **20.03.2013**
(21) Anmeldenummer: 09009988.8
(22) Anmeldetag: 03.08.2009
(51) Int. Cl.: G06F 12/02

(54) **Speicherverwaltung in einem portablen Datenträger**
Storage management in a portable data storage medium
Gestion de mémoire dans un support de données portable

(30) Priorität: 07.08.2008 DE 102008036873
(43) Veröffentlichungstag der Anmeldung: 10.02.2010
(73) Patentinhaber: Giesecke & Devrient GmbH, 81677 München (DE)
(72) Erfinder: Kramposthuber, Georg, 80639 München (DE)

(56) Entgegenhaltungen:
- US-A- 4 445 170
- US-A- 5 727 185
- US-A1- 2002 055 941
- US-A1- 2003 023 949
- US-A1- 2008 010 432
- US-B1- 6 381 738

## Beschreibung

Die vorliegende Erfindung betrifft ein Verfahren zum Verwalten von Speicherressourcen in einem portablen Datenträger sowie einen Datenträger mit einer derartigen Speicherverwaltung.

Die Speicherressourcen eines volatilen Speichers in einem portablen Datenträger werden von einer Speicherverwaltung des Datenträgers den von einem Prozessor nebenläufig ausgeführten Prozessen oder "Threads' (so genannte "leichtgewichtige Prozesse") zugeteilt, wobei ein Prozess aus mehreren wiederum nebenläufig ausführbaren Threads bestehen kann.

Zur Verwaltung der von einem Prozess oder Thread benötigten Speicherressourcen sind insbesondere die beiden abstrakten Speicherstrukturen des "Stack" und des "Heap" bekannt. Der nachfolgend als Stapelspeicher bezeichnete "Stack" repräsentiert einen strukturierten Speicherbereich eines jeden ausgeführten Prozesses oder Threads, der diesem Prozess oder Thread individuell zugewiesen ist. Es dient zur Speicherung von lokalen Variablen, Zwischenergebnissen oder dergleichen und wird mittels so genannter "push"-und "pop"-Operationen verwaltet. Der Speicherbedarf für die Stapelspeicher von Prozessen oder Treads ist in der Regel bereits bei der Kompilierung des betreffenden Programms bekannt. Demgegenüber repräsentiert der Heap einen Speicherbereich, aus dem während der Laufzeit eines Prozesses oder Threads Speicherressourcen angefordert werden können, deren Größe und Anforderungszeitpunkt bei der Kompilierung des Programms noch nicht bekannt war. Prinzipiell reicht ein einziger Heap aus, um die von sämtlichen Prozessen oder Threads angeforderten Speicherressourcen zu verwalten. Vor diesem Hintergrund hat die Speicherverwaltung eines Betriebssystems die Aufgabe, für die logischen Speicherstrukturen des Stapelspeichers und des Heap ausreichende physikalische Speicherressourcen bereitzustellen, z.B. im volatilen RAM-Speicher des Datenträgers.

In diesem Zusammenhang ist es vorteilhaft, wenn der für einen Stapelspeicher vorgesehene physikalische Speicher im Wesentlichen zusammenhängend ist, da ansonsten die Vorteile der logisch einfachen Struktur des Stapelspeichers nicht ausgenutzt werden können. Bei einem Multithreading-Betriebssystem, das mehrere Prozesse/Threads nebenläufig ausführen kann, ergibt sich dann jedoch das Problem, dass jedem Prozess/Thread vorab ein konstanter Speicherbereich für den jeweiligen Stapelspeicher zugeteilt werden muss. Vor allem bei Geräten mit beschränkten Speicherressourcen, wie z.B. Chipkarten oder dergleichen, führt dies jedoch zu einem unnötig hohen Speicherverbrauch, da nur in seltenen Fällen tatsächlich alle Stapelspeicher den zugewiesenen Speicherbereich in vollem Umfang nutzen.

Deshalb werden die Speicherressourcen für die benötigten Stapelspeicher dynamisch verwaltet - d.h. Speicherbereiche werden auf Anforderung zugeteilt und freigegeben, ohne dass der Zeitpunkt und/ oder die Größe der Anforderung in voraus bekannt ist -, indem einem Prozess/Thread ein Speicherbereich für seinen Stapelspeicher erst dann zugeteilt wird, wenn der Prozess/Thread erzeugt wird. Dies ist jedoch mit einer fortschreitenden Fragmentierung des Speichers verbunden, da ein prinzipiell zwar genügend großer Freispeicher im Laufe der Zeit in zahlreiche kleine Speicherabschnitte unterteilt wird und dann größere zusammenhängende Speicherressourcen nicht mehr zugeteilt werden können.

Diese Fragmentierung des Speichers kann durch eine "Garbage Collection" der Speicherverwaltung beseitigt werden, bei der einerseits solche zunächst zugeteilten Speicherbereiche wieder freigegeben werden, die von den entsprechenden Prozessen/Threads nicht mehr benötigt werden, und andererseits zumindest Teile des Speichers kompaktiert werden, d.h. die zugeteilten Speicherressourcen werden derart "zusammengeschoben", dass wieder größere zusammenhängende Speicherbereiche entstehen. Die Garbage Collection wird von der Speicherverwaltung des Betriebssystems jedoch in der Regel eigenständig zum jeweils notwendigen Zeitpunkt durchgeführt, ohne dass ausgeführte Prozesse/Threads darauf Einfluss nehmen können. Dadurch kann ein Prozess/ Thread zu einem nicht vorhersehbaren Zeitpunkt während seiner Laufzeit außergewöhnlich lange unterbrochen werden, was vor allem im Zusammenhang mit solchen Prozessen/Threads nachteilig ist, die Echtzeitanforderungen erfüllen müssen.

Es ist demnach die Aufgabe der vorliegenden Erfindung, ein Verfahren zur dynamischen Verwaltung von Speicherressourcen vorzuschlagen, welches die vorstehend beschriebenen Nachteile vermeidet.

US 4,445,170 offenbart ein Verfahren zum dynamischen Verwalten von Speicherressourcen, wobei erste Anteile der Speicherressourcen durch eine erste Speicherverwaltung dynamisch verwaltet werden und von den ersten Anteilen verschiedene zweite Anteile der Speicherressourcen von einer von der ersten Speicherverwaltung unabhängigen zweiten Speicherverwaltung dynamisch verwaltet werden, gemäß dem Oberbegriff von Anspruch 1. Die erste Speicherverwaltung verwaltet Daten. Die zweite Speicherverwaltung verwaltet einen Stapelspeicher (stack).

US 5,727,185 offenbart ein Verfahren zur dynamischen Speicherverwaltung von Freispeicher eines Computersystems, wobei der Freispeicher in zwei logische Speicherbereiche mit unterschiedlichen Zugriffsbedingungen geteilt wird. In den Speicherbereichen sind beispielsweise Nutzerdaten gespeichert.

Diese Aufgabe wird erfindungsgemäß durch ein Verfahren und einen portablen Datenträger mit den Merkmalen der unabhängigen Ansprüche gelöst. Die davon abhängigen Ansprüche beschreiben vorteilhafte Ausgestaltungen und Weiterbildungen der Erfindung.

Die vorliegende Erfindung basiert auf dem Grundgedanken, bestimmte Anteile der Speicherressourcen durch eine separate, von der gewöhnlichen Speicherverwaltung verschiedene zweite Speicherverwaltung derart zu verwalten, dass diese anderweitig verwalteten Anteile der gewöhnlichen Garbage Collection nicht mehr unterworfen sind. Ein erfindungsgemäßes Verfahren zum dynamischen Verwalten von Speicherressourcen eines portablen Datenträgers zeichnet sich also dadurch aus, dass erste Anteile der Speicherressourcen des Datenträgers durch eine erste Speicherverwaltung dynamisch verwaltet werden und von den ersten Anteilen verschiedene zweite Anteile der Speicherressourcen von einer von der ersten Speicherverwaltung unabhängigen zweiten Speicherverwaltung dynamisch verwaltet werden.

Dadurch kann einerseits eine speziell auf die Anforderungen der zweiten Speicheranteile bzw. der anfordernden Prozesses/Threads zugeschnittene zweite Speicherverwaltung bereitgestellt werden, welche stets ein Bereitstellen von Speicherressourcen nahezu in Echtzeit sicherstellt. Andererseits wird die Garbage Collection entlastet, da diese nicht mehr für die Bereinigung des gesamten Speichers zuständig ist und das Laufzeitverhalten von auf dem Prozessor des Datenträgers ausgeführten Prozessen/Threads wird verbessert. Da sowohl die erste als auch die zweite Speicherverwaltung die ersten bzw. zweiten Anteile der Speicherressourcen dynamisch verwalten, werden die Speicherressourcen des Datenträgers effektiv genutzt und eine unnötige Verschwendung von Speicherressourcen wird zuverlässig verhindert.

Der Einfachheit halber und zum leichteren Verständnis der Erfindung wird angenommen, dass der logische Speicher und der physikalische Speicher denselben Adressbereich besitzen und deshalb nicht zwischen logischem und physikalischem Speicher unterschieden werden muss. Selbstverständlich ist die vorliegende Erfindung auch anwendbar, wenn die Adressbereiche des logischen und des physikalischen Speichers verschieden sind, z.B. weil der logische Speicher größer als der physikalische Speicher ist. Weiterhin bezeichnet nachfolgend ein Prozess oder ein Thread jeweils ein ausgeführtes Programm oder einen ausgeführten Programmteil, welches zumindest teilweise in den physikalischen Speicher geladen wurde und durch den Prozessor des Datenträgers ausgeführt wird. Sofern also nicht anderes gesagt wird, muss im Kontext der vorliegenden Erfindung zwischen Prozessen und Threads nicht unterschieden werden.

Ein erfindungsgemäßer portabler Datenträger umfasst Speicherressourcen, beispielsweise in Form eines volatilen RAM-Speichers oder dergleichen, einen Prozessor, ein Betriebssystem mit einer ersten Speicherverwaltungseinrichtung zum dynamischen Verwalten der Speicherressourcen sowie zumindest eine auf dem Prozessor als Prozess oder als ein oder mehrere Threads ausführbare Applikation. Erfindungsgemäß ist die erste Speicherverwaltungseinrichtung eingerichtet, erste Anteile der Speicherressourcen dynamisch zu verwalten. Das Betriebssystem umfasst weiterhin eine von der ersten Speicherverwaltungseinrichtung verschiedene zweite Speicherverwaltungseinrichtung, die ihrerseits eingerichtet ist, von den ersten Anteilen verschiedene zweite Anteile der Speicherressourcen dynamisch zu verwalten.

Erfindungsgemäß werden die erste und zweite Speicherverwaltung durch zwei möglichst unabhängig arbeitende, separate Speicherverwaltungseinrichtungen des Betriebssystems des Datenträgers realisiert. Dabei werden die ersten und zweiten Anteile der Speicherressourcen jeweils ausschließlich von einer der beiden Speicherverwaltungseinrichtung exklusiv verwaltet. Insofern erkennt jede der Speicherverwaltungseinrichtungen die von der jeweils anderen Speicherverwaltungseinrichtung verwalteten Speicherressourcen als solche. Die von keiner der beiden Speicherverwaltungseinrichtungen verwalteten Speicherressourcen stehen beiden Speicherverwaltungseinrichtungen für neue Zuteilungen an Prozesse/Threads zu Verfügung. Prinzipiell kann also jede der Speicherverwaltungseinrichtungen auf den gesamten (freien) Speicher zugreifen, ohne dass die Speicherressourcen bereits im Voraus in jeweils für eine der beiden Speicherverwaltungseinrichtungen exklusiv zugängliche Speicherbereiche unterteilt werden müssen. Auf diese Weise wird eine optimale Ausnutzung der vorhandenen Speicherressourcen erreicht.

Vorzugsweise ist der Datenträger als Chipkarte, sichere Multimediakarte, Mobilfunkkarte, USB-Speichermedium oder dergleichen ausgebildet. Auf einem solchen Datenträger, der bauartbedingt zumeist nur über vergleichsweise geringe Speicherressourcen verfügt und oftmals Prozesse auszuführen hat, die Echtzeitanforderungen erfüllen müssen, kann das erfindungsgemäße Verfahren besonders vorteilhaft realisiert werden.

Ein dynamisches Verwalten von Speicherressourcen durch die beiden Speicherverwaltungen umfasst insbesondere ein Zuteilen der (zunächst beiden Speicherverwaltungen zugänglichen) freien Speicherressourcen an einen ausgeführten Prozess auf Anfrage dieses Prozesses sowie ein Freigeben der einem Prozess von der betreffenden Speicherverwaltung zugeteilten Speicherressourcen. Hierbei entsprechen die von einer der Speicherverwaltungen verwalteten Anteile der Speicherressourcen denjenigen Speicherressourcen, die diese Speicherverwaltung zugeteilt und nicht wieder freigegeben hat.

Die dynamische Verwaltung von Speicherressourcen durch eine erfindungsgemäße Speicherverwaltung kann insbesondere folgende Schritte umfassen:
- Empfangen einer Speicheranforderung nach Speicherressourcen definierter Größe beim Erzeugen eines Prozesses/Threads oder von dem Prozess/Thread während dessen Laufzeit;
- Ermitteln von freien Anteilen der Speicherressourcen der geforderten Größe durch die Speicherverwaltungseinrichtung;
- Zuteilen der ermittelten freien Anteile der Speicherressourcen an den anfordernden Prozess/ Thread und Markieren der zugeteilten Anteile als "zugeteilt" oder "nicht frei";
- Empfangen einer Speicherfreigabenachricht von einem Prozess/Thread hinsichtlich von diesem Prozess/Thread zugeteilten Anteilen der Speicherressourcen oder Erkennen durch die Speicherverwaltungseinrichtung, dass ein Prozess/Thread die ihm zugeteilten Anteile an Speicherressourcen nicht mehr benötigt;
- Freigeben der betreffenden Anteile der Speicherressourcen durch Markieren der Anteile als "zuteilbar" oder "frei" durch die Speicherverwaltungseinrichtung.

Die dynamische Verwaltung von Speicherressourcen durch eine der Speicherverwaltungseinrichtungen kann zusätzlich eine Kompaktierung der durch diese Speicherverwaltungseinrichtung verwalteten (fragmentierten) Anteile der Speicherressourcen umfassen, die vorzugsweise vollständig unabhängig von der Verwaltung der jeweils anderen Anteile der Speicherressourcen durch die jeweils andere Speicherverwaltungseinrichtung ist. Vorzugsweise erkennen die Speicherverwaltungen unabhängig voneinander, wann die einem Prozess/Thread zugeordneten Anteile der Speicherressourcen von dem Prozess/Thread nicht mehr benötigt werden und freigegeben werden können. Derartige freigewordene Anteile der Speicherressourcen stehen dann wieder beiden Speicherverwaltungen zur erneuten Zuteilung an anfordernde Prozesse/Threads zur Verfügung.

Dadurch wird ermöglicht, dass beide Speicherverwaltungseinrichtungen die von ihnen jeweils verwalteten Anteile in individueller Weise und angepasst z.B. an die anfragenden Prozesse verwalten können. Während es beispielsweise für die erste Speicherverwaltung nützlich und vorteilhaft sein kann, die verwalteten Speicherressourcen nur gelegentlich mittels einer herkömmlichen Garbage Collection zu bereinigen, d.h. von Prozessen nicht mehr benötigte Speicherressourcen freizugeben und gegebenenfalls fragmentierte Speicherbereiche zu kompaktieren, kann es für die zweite Speicherverwaltung vorteilhaft sein, die Schritte des Freigebens von nicht mehr benötigtem Speicher bzw. des Kompaktierens betroffener Speicherbereiche jeweils unmittelbar durch eine explizite Freigabeoperation oder zum nächstmöglichen Zeitpunkt durchzuführen.

Erfindungsgemäß werden weiter von der ersten Speicherverwaltung die von einem Prozess/Thread während seiner Laufzeit angeforderte Speicherressourcen als erste Anteile (aus dem Heap) zugeteilt und dynamisch verwaltet. Die für einen Stapelspeicher eines Prozesses/Threads angeforderten Speicherbereiche werden hingegen durch die zweite Speicherverwaltung als zweite Anteile zugeteilt und dynamisch verwaltet. Auf diese Weise wird insbesondere ermöglicht, dass für einen Stapelspeicher vorgesehene Speicheranteile durch die zweite Speicherverwaltung unabhängig von einer Garbage Collection der ersten Speicherverwaltung sind und insofern durch die zweite Speicherverwaltung stets im Wesentlichen unmittelbar und insbesondere ohne Unterbrechung durch eine Garbage Collection zugeteilt werden können. Eine unerwünschte Verzögerung von Prozessen/Threads, die während der Laufzeit keinen oder nur wenig Speicher (aus dem Heap) anfordern, d.h. im Wesentlichen lediglich den Stapelspeicher benötigen, kann damit wirkungsvoll verhindert werden.

Gemäß einer Ausführungsform der vorliegenden Erfindung verwaltet die zweite Speicherverwaltungseinrichtung die Speicherressourcen für die Stapelspeicher in Form von zusammenhängenden Speicheranteilen konstanter Größe. Auf diese Weise kann eine externe Fragmentierung im Speicher vermieden werden, da freie Speicherbereiche immer dieselbe konstante Größe und wie die von der zweiten Speicherverwaltung zugeteilten Speicheranteile aufweisen. Vorzugsweise steht diese konstante Größe in einem sinnvollen Verhältnis zur Größe der jeweils in dem Stapelspeicher abgelegten ("gepushten") Methodenrahmen, so dass jeweils zumindest einige Methodenrahmen in einem solchen Speicherbereich abgelegt werden können. Dadurch wird eine interne Fragmentierung weitgehend verhindert, da die zusammenhängenden freien Speicherbereiche konstanter Größe im Wesentlichen vollständig mit funktional zusammenhängenden Daten eines Stapelspeicher gefüllt werden und die Ausführung des betreffenden Prozesses nicht gestört wird.

Gemäß einer weiteren Ausführungsform kann die zweite Speicherverwaltung die den Stapelspeichen zugeteilten Speicherressourcen in Form von zusammenhängenden Speicheranteilen einer Größe verwalten, die genau der Größe eines auf dem entsprechenden Stapelspeicher abzulegenden Methodenrahmens entspricht. Auf diese Weise wird eine interne Fragmentierung der verwalteten Speicheranteile vollständig vermieden, da die Größe des jeweiligen Speicheranteils gerade der Größe des Methodenrahmens entspricht, für den die zweite Speicherverwaltung Speicheranteile bereitstellt. Da diese Speicheranteile in der Regel verschiedene Größen aufweisen, kann jedoch eine externe Fragmentierung nicht vollständig verhindert werden. Dadurch, dass die zweite Speicherverwaltung aber vorzugsweise nicht mehr benötigte Anteile der Speicherressourcen direkt freigibt und eine eventuelle Kompaktierung direkt durchführt, wird die externe Fragmentierung dennoch weitgehend vermieden.

Gemäß der Erfindung umfasst das Betriebssystem eine Multithreading-fähige virtuelle Maschine, beispielsweise eine "Java Virtuelle Maschine" und die erste und zweite Speicherverwaltungseinrichtung sind in eine Freispeicherverwaltung der Virtuellen Maschine integriert.

Wenn eine erfindungsgemäß eingerichtete Virtuelle Maschine zumindest einen Thread ausführt, verwaltet die erste Speicherverwaltungseinrichtung Speicherressourcen für Objekte des Threads, welche von anderen Objekten referenziert werden und/ oder ihrerseits andere Objekte referenzieren. Die zweite Speicherverwaltung verwaltet hingegen Speicherressourcen für die Stapelspeicher der in der virtuellen Maschine ausgeführten Threads.

Zusätzlich zu den Speicherressourcen für die Stapelspeicher verwaltet die zweite Speicherverwaltung auch die Speicherressourcen für diejenigen Objekte der Threads dynamisch, die entweder gar nicht oder lediglich aus einem Stapelspeicher referenziert werden und selbst keine weiteren Objekte referenzieren. Solchen Objekten zugeteilte Speicherressourcen können nach Ausführung ihrer Methoden direkt wieder freigegeben werden.

Wenn ein derartiges von der zweiten Speicherverwaltung zusätzlich verwaltetes (nicht oder aus einem Stapelspeicher referenziertes) Objekt von einem anderen Objekt referenziert wird, übergibt die zweite Speicherverwaltungseinrichtung die Verwaltung der dem Objekt zugeordneten Speicherressourcen an die erste Speicherverwaltung. Gegebenenfalls wird der entsprechende Speicheranteil dabei im Speicher zu Kompaktierungszwecken verschoben.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den beiliegenden Zeichnungen, die zeigen:
- Figur 1: eine bevorzugte Ausführungsform eines erfindungsgemäßen Datenträgers; und
- Figur 2: eine schematische Darstellung der Belegung eines RAM-Speichers eines Datenträgers gemäß Fig. 1.

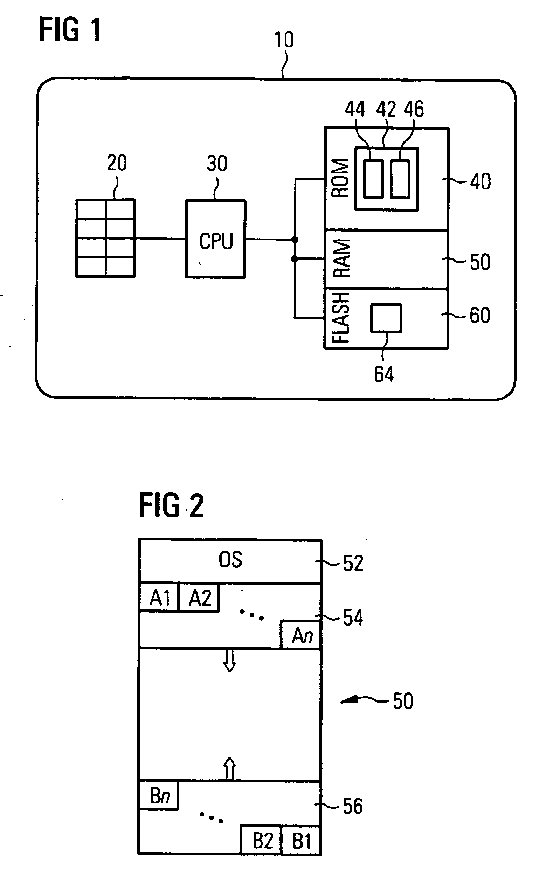

Mit Bezug auf Fig. 1 umfasst ein Datenträger 10, der hier als Chipkarte ausgebildet ist, eine Datenkommunikationsschnittstelle 20, einen Prozessor (CPU) 30 und verschiedene Speicher 40, 50 und 60. Der Datenträger 10 kann auch in anderer Gestalt ausgebildet sein, z.B. als USB-Token, Mobilfunkkarte, sichere Multimediakarte oder dergleichen.

Die Datenkommunikationsschnittstelle 20 ist als Kontaktfeld gemäß ISO 7816 ausgebildet und dient zur Datenkommunikation mit einer externen Datenverarbeitungseinrichtung (nicht dargestellt), z.B. einem Kartenterminal, sowie zur Energieversorgung des Datenträgers 10. Alternativ oder zusätzlich kann der Datenträger 10 auch über eine eigene Energieversorgung (nicht dargestellt) verfügen, z.B. über eine Batterie. Auch andere kontaktbehaftete Schnittstellen können vorgesehen sein. Alternativ oder zusätzlich kann auch eine Kontaktlos-Datenkommunikationsschnittstelle (nicht dargestellt) zur kontaktlosen Datenkommunikation vorgesehen sein, z.B. eine Antenne.

In dem persistenten, nicht wiederbeschreibbaren ROM-Speicher 40 liegt ein Multithreading-fähiges Betriebssystem 42, welches den Datenträger 10 steuert. Das Betriebssystem 42 umfasst eine erste Speicherverwaltungseinrichtung 44 und eine zweite Speicherverwaltungseinrichtung 46 zum dynamischen Verwalten des RAM-Speichers 50, der dem Datenträger 10 als volatiler Arbeitsspeicher dient. Die erste und zweite Speicherverwaltung 44, 46 sind hierbei insbesondere derart eingerichtet, dass
- beim dynamischen Verwalten von Speicherressourcen 50 durch eine der Speicherverwaltungen 44, 46 freie Speicherressourcen an einen auf dem Datenträger 10 ausgeführten Prozess auf Anfrage des Prozesses zugeteilt und einem Prozess zugeteilte Speicherressourcen freigegeben werden, wobei die von einer der Speicherverwaltungen 44, 46 verwalteten Anteile A1, A2, ..., An, B1, B2, ..., Bn der Speicherressourcen 50 die von dieser Speicherverwaltung 44, 46 zugeteilten und noch nicht freigegebenen Speicherressourcen repräsentieren; dass
- das dynamische Verwalten von Speicherressourcen 50 durch eine der Speicherverwaltungen 44 ein von der jeweils anderen Speicherverwaltung 46 unabhängiges Kompaktieren der von dieser Speicherverwaltung 44 verwalteten Anteile A1, A2, ..., An der Speicherressourcen 50 umfasst; und dass
- die erste 44 und zweite Speicherverwaltung 46 jeweils unabhängig voneinander einem Prozess zugeteilte und von dem Prozess nicht mehr benötigte Anteile A1, A2, ..., An, B1, B2, ..., Bn der Speicherressourcen 50 erkennen und die als nicht mehr benötigt erkannten Anteile A1, A2, ..., An, B1, B2, ..., Bn der Speicherressourcen 50 freigeben.

Mit Bezug auf Fig. 2 werden entsprechende Speicherverwaltungseinrichtungen 44, 46 nachstehend genauer beschrieben. Alternativ kann das Betriebssystem 42 oder zumindest Teile davon, wie z.B. die erste und/oder die zweite Speicherverwaltungseinrichtung 44, 46, in dem wiederbeschreibbaren FLASH-Speicher 60, der alternativ auch als EEPROM-Speicher oder dergleichen ausgebildet sein kann, gespeichert sein. Im FLASH-Speicher 60 ist zumindest eine Applikation 64 abgelegt, die auf dem Prozessor 30 als ein Prozess mit mehreren Threads ausführbar ist.

Beim Ausführen der Applikation 64 auf dem Prozessor 30 teilen die Speicherverwaltungen 44, 46 dem entsprechenden Prozess Speicherressourcen aus dem RAM-Speicher 50 zu. Dabei verwaltet die erste Speicherverwaltungseinrichtung 44 dynamisch Prozessen zugeteilte erste Anteile A1, A2, ..., An der Speicherressourcen (die den Speicherbereich 54 bilden), während die zweite Speicherverwaltungseinrichtung 46 unabhängig von der ersten Speicherverwaltungseinrichtung 44 von den ersten Anteilen A1, A2, ..., An verschiedene zweite Anteile B1, B2, ..., Bn der Speicherressourcen dynamisch verwaltet (die den Speicherbereich 56 bilden). Das Betriebssystem 42 bzw. der Betriebssystemkern belegt den Speicherbereich 52.

Der Speicherbereich 54 mit den Anteilen A1, A2, ..., An wird exklusiv von der ersten Speicherverwaltungseinrichtung 44 verwaltet, während der Speicherbereich 56 mit den Anteilen B1, B2, ..., Bn von der zweiten Speicherverwaltungseinrichtung 46 exklusiv verwaltet wird. Das dynamische Verwalten von Speicherressourcen in dem RAM-Speicher 50 umfasst das Empfangen von Speicheranforderungen von Prozessen, das Auffinden von zuteilbaren, freien Speicherressourcen in dem RAM-Speicher 50 (d.h. von solchen Speicherressourcen, die weder in dem Speicherbereich 52 noch in dem Speicherbereich 54 liegen), das Zuteilen eines Anteils dieser freien Speicherressourcen an den anfordernden Prozess, sowie das Erkennen von nicht mehr benötigten Speicheranteilen und das Freigeben dieser Anteile. Freigegebene Speicheranteile können dann individuell zugeschnitten erneut zugeteilt werden.

Sowohl die erste 44 als auch die zweite Speicherverwaltungseinrichtung 46 haben mit Ausnahme des für das Betriebssystem 42 reservierten Speicherbereichs 52 Zugriff auf den gesamten Speicher 50, d.h. die verbleibenden, nicht vom Betriebssystem 42 belegten Speicherressourcen sind nicht vorab oder statisch auf die Speicherverwaltungseinrichtungen 44, 46 aufgeteilt. Die Speicherverwaltungseinrichtungen 44,46 arbeiten im Wesentlichen unabhängig voneinander, d.h. ein Anteil A*i*, der von der ersten Speicherverwaltungseinrichtung 44 zugeteilt wird, bleibt solange in der Verwaltung der ersten Speicherverwaltungseinrichtung 44, bis der zugeteilte Anteil A*i* von dem betreffenden Prozess nicht mehr benötigt wird und von der Speicherverwaltung 44 freigegeben wird. Dabei erkennt jede der beiden Speicherverwaltungseinrichtungen 44, 46 die von der jeweils anderen Speicherverwaltungseinrichtung 46, 44 bereits zugeteilten Speicheranteile Bi, A*i*, d.h. die belegten Speicheranteile, die aktuell nicht zugeteilt werden können.

Ferner erkennt jede Speicherverwaltungseinrichtung 44, 46 die von ihr zugeteilten und von den Threads des Prozesses nicht mehr benötigten Speicheranteile. Diese Anteile A1, A2, ..., A*n*, B1, B2, ..., B*n* der Speicherressourcen werden dann von der jeweiligen Speicherverwaltung 44, 46 wieder freigegeben und stehen dann auch der jeweils anderen Speicherverwaltung 46, 44 zu Verfügung.

Weiterhin ist jede der beiden Speicherverwaltungen 44, 46 eingerichtet, Speicherressourcen, die von ihr zugeteilt worden sind und die in dem Speicher 50 unzusammenhängend verteilt angeordnet sind, zu kompaktieren, um einer Fragmentierung der Speicherbereiche 54, 56 entgegenzuwirken. Dabei werden beispielsweise von der ersten Speicherverwaltungseinrichtung 44 verwaltete, verteilt vorliegende Speicheranteile A1, A2, ..., A*n* derart im Speicher 50 verschoben, dass ein oder zumindest wenige relativ große zusammenhängende Abschnitte von zugeteilten Speicherressourcen entstehen. Als Ergebnis liegt danach auch der zuteilbare Freispeicher im Wesentlichen wieder zusammenhängend vor, wodurch der Speicherverwaltungsprozess allgemein vereinfacht und beschleunigt wird und auch das Zuteilen großer, zusammenhängender Speicherbereiche ermöglicht wird. Insofern zeigt Fig. 2 eine ideale Speicheranordnung mit maximal großem, zusammenhängenden Freispeicher und Speicherbereichen 54, 56.

Die beiden Speicherverwaltungen 44, 46 unterscheiden sich auch in der Art und Weise, wie sie zugeteilte und nicht mehr benötigte Anteile der Speicherressourcen erkennen und wann sie diese freigeben, sowie darin, wie nicht freizugebenden Anteile kompaktiert werden.

Beim Start der Applikation 64 werden dem entsprechenden Prozess Speicheranteile aus zwei verschiedene Speicherbereichen 54, 56 des Speichers 50 zugeteilt. Der von der ersten Speicherverwaltungseinrichtung 44 dynamisch verwaltete Speicherbereich 54 dient als Heap zum Anlegen von während der Laufzeit des Prozesses angeforderten Anteilen A1, A2, ..., An der Speicherressourcen. Die Speicherverwaltungseinrichtung 44 teilt den Prozessen und Threads solange Speicheranteile A1, A2, ..., An zu, wie es angesichts der Größe des Freispeicher im Speicher 50 möglich ist. Dabei gibt sie zuerst nur solche Anteile A1, A2, ..., An der Speicherressourcen frei, die explizit von einem Prozess oder Thread als freizugeben angezeigt werden.

Ist eine Zuteilung von angeforderten Speicheranteilen nicht mehr möglich, da z.B. die Größe der angeforderten Speicherressourcen die Größe des größten zusammenhängenden Freispeicherbereichs übersteigt, führt die Speicherverwaltungseinrichtung 44 eine Garbage Collection durch. Dabei werden diejenigen im Heap 54 angelegten Objekte ermittelt, die nicht referenziert werden und dementsprechend gelöscht werden können. Verschiedene Verfahren zum Erkennen dieser Objekte sind bekannt, z.B. das Mark-and-Sweep-Verfahren. Die solchen Objekten im Speicherbereich 54 zugeteilten Anteile werden dann von der Speicherverwaltungseinrichtung 44 freigegeben und anschließend kann eine Kompaktierung erfolgen. Der Zeitpunkt der Garbage Collection ist in der Regel nicht vorhersehbar und hängt von den konkreten Speicheranforderungen der Threads des Prozesses ab.

Der von der ersten Speicherverwaltungseinrichtung 44 verwaltete Speicherbereich 54 beginnt an einem Ende des den beiden Speicherverwaltungseinrichtungen 44, 46 zur Verfügung stehenden Adressbereichs des Speichers 50, wohingegen die Speicherverwaltungseinrichtung 46 mit dem Zuteilen von Speicherbereichen B1, B2, ..., B*n* am anderen Ende des Adressbereichs im Speicherbereich 56 beginnt (vgl. Pfeile in Fig. 2). Zunächst ist keiner der Speicherbereiche 54, 56 begrenzt, sondern wächst bzw. schrumpf allein aufgrund der Speicherzuteilungen und Speicherfreigaben der beiden Speicherverwaltungseinrichtungen 44, 46.

Die zweite Speicherverwaltungseinrichtung 46 verwaltet im Speicherbereich 56 Speicherbereiche B1, B2, ..., B*n*, welche jeweils den Threads des Prozesses zum Anlegen ihrer jeweiligen Stapelspeicher zugeteilt worden sind, wobei jeder Threads seinen eigenen Stapelspeicher besitzt. Ein Stapelspeicher wird bei Ausführung des Threads mittels "push"- und "pop"-Operationen verwaltet, wobei jeweils "oben" auf dem entsprechenden Stapel der Methodenrahmen zur aktuell ausgeführten Methode liegt, der lokale Variablen, Zwischenergebnisse der Methode und dergleichen umfasst. Ist die Methode abgearbeitet, wird der Methodenrahmen von dem Stapel entfernt ("pop") und der Rahmen der darunterliegenden Methode, welche die gerade beendete Methode aufgerufen hat, wird zum aktuellen Methodenrahmen. Wird von dieser Methode aus eine weitere Methode gestartet, so wird der Methodenrahmen dieser weiteren Methode auf den Stapel gelegt ("push") und repräsentiert dann den aktuellen Methodenrahmen.

Die zweite Speicherverwaltungseinrichtung 46 teilt die Anteile B1, B2, ..., Bn der Speicherressourcen zum Anlegen der Stapelspeicher derart zu, dass die Größe des betreffenden Anteils jeweils genau der Größe des in diesem Anteil B1, B2, ..., B*n* anzulegenden Methodenrahmens auf dem entsprechenden Stapelspeicher entspricht. Auf diese Weise wird eine interne Fragmentierung des Speichers 50 im Speicherbereich 56 vermieden. Ist die Methode, der ein Anteil der Speicherressourcen zugeteilt wurde, abgearbeitet, so wird der Speicheranteil unmittelbar wieder freigegeben, ohne dass es einer separaten Garbage Collection bedarf. Dieser Vorgang kann dabei auf die spezifischen Merkmale des RAM-Speichers 50 angepasst sein (z.B. durch Nutzung spezieller Hardware-Eigenschaften, spezieller Maschinen-Opcodes, DMA und dergleichen). Alternativ kann eine Speicherfreigabe des Anteils einer abgearbeiteten Methode auch verschoben werden, solange genügend freie Speicherressourcen vorhanden sind, bis Speicheranteile mehrerer ausgeführter Methodenrahmen gleichzeitig freigegeben werden können. Eventuell entstehende "Lücken" von nun wieder zuteilbarem Speicher werden mittels einer Kompaktierung sofort geschlossen, so dass auch eine externe Fragmentierung des Speicherbereichs 56 praktisch kaum vorkommt.

Wie beschrieben unterscheidet sich die Art der Verwaltung des Speicherbereichs 56 durch die zweite Speicherverwaltungseinrichtung 46 deutlich von der Garbage Collection der ersten Speicherverwaltungseinrichtung 44, die jedoch durch die davon abweichende erste Speicherverwaltung 44 entlastet wird. Aufgrund der Verwaltung der Anteile B1, B2, ..., Bn für die Stapelspeicher, die nicht der Garbage Collection unterworfen ist, ist es für die zweite Speicherverwaltung 46 stets möglich, nahezu in Echtzeit weitere Speicheranteile B1, B2, ..., B*n* für einen Stapelspeicher bereitzustellen.

Alternativ kann die zweite Speicherverwaltungseinrichtung 46 die Speicheranteile B1, B2, ..., Bn zum Anlegen der Stapelspeicher für die Threads eines Prozesses auch in Form von Speicheranteilen konstanter Größe zuteilen (so genannte "chunks"). Auf diese Weise kann eine externe Fragmentierung vermieden werden, da durch freigegebenen Speicher entstehende Lücken wieder in gleicher Größe zugeteilt werden können. Die Freigabe von nicht mehr benötigten Speicheranteilen kann auch in dieser Ausführungsform entweder direkt für jeden "Chunk" oder verzögert für mehrere "Chunks" gleichzeitig vorgenommen werden. Für die Verwaltung derartiger Anteile B1, B2, ..., Bn der Speicherressourcen ist jedoch zusätzliche Verwaltungsinformation notwendig, z.B. in Form von verketteten Listen zum Verfolgen der nacheinander angelegten "Chunks" oder dergleichen. Weiterhin ist darauf zu achten, dass die (konstante) Größe der "Chunks" so gewählt ist, dass zumindest jeweils ein Methodenrahmen - besser noch mehrere Methodenrahmen - komplett in einem "Chunk" gespeichert werden können, um das Ausführen der Threads nicht zu beeinträchtigen und um interne Fragmentierung weitgehend zu vermeiden.

Das Betriebssystem 42 umfasst eine Virtuelle Maschine, beispielsweise eine Java Virtuelle Maschine, und die beiden Speicherverwaltungseinrichtungen 44, 46 sind in die Freispeicherverwaltung der Virtuellen Maschine integriert. Die zweite Speicherverwaltungseinrichtung 46 verwaltet dann Speicheranteile B1, B2, ..., Bn solcher Objekte dynamisch, die nicht von anderen Objekten referenziert werden und ihrerseits keine anderen Objekte referenzieren. Solche temporären Objekte werden dann allenfalls von einem auf einem Stapelspeicher liegenden Methodenrahmen referenziert. Die diesen Objekten zugewiesenen Speicheranteile B1, B2, ..., B*n* können somit freigegeben werden, wenn der jeweils referenzierende Methodenrahmen bei Beendigung der Methode vom Stapelspeicher entfernt wird ("pop"). Wenn jedoch ein zunächst temporäres Objekt von einem anderen Objekt referenziert wird, wird die Verwaltung des betreffenden Speicheranteils für dieses Objekt von der zweiten Speicherverwaltungseinrichtung 46 an die erste Speicherverwaltungseinrichtung 44 übergeben.

In genau der gleichen Weise kann eine Speicherverwaltung der Speicherressourcen 50 durch die beiden Speicherverwaltungseinrichtungen 44, 46 durchgeführt werden, wenn neben dem Prozess zu der Applikation 64 noch weitere Prozesse nebenläufig ausgeführt werden. Die von den nebenläufigen Prozessen während ihrer Laufzeit angeforderten Speicheranteile A1, A2, ..., An werden von der ersten Speicherverwaltungseinrichtung 44 im Speicherbereich 54 dynamisch verwaltet und die Speicheranteile B1, B2, ..., Bn für die Stapelspeicher der Prozesse werden durch die Speicherverwaltungseinrichtung 46 im Speicherbereich 56 verwaltet.

Die Speicherverwaltungseinrichtungen 44, 46 können derart erweitert werden, dass sie neben der Verwaltung von volatilen Speicherressourcen auch ein Auslagern von Daten in persistente Speicherbereiche steuern, beispielsweise in den FLASH-Speicher 60. Dies ist insbesondere dann wichtig, wenn volatile Speicherressourcen knapp sind und/ oder wenn der logische Hauptspeicher eines Prozesses größer ist als der verfügbare physische Hauptspeicher. Neben dem Speicherbereich 54 (dem Heap) im volatilen Speicher 50 wird dann ein Heap im persistenten Speicher 60 angelegt und es werden volatil gespeicherte und persistent gespeicherte Objekte unterschieden. Wenn ein schnell-volatiler Heap (nicht dargestellt) vorhanden ist, werden temporäre Objekte in dem schnell-volatilen Heap verwaltet, während gewöhnliche volatile und persistente Objekte wie vorstehend beschrieben verwaltet werden. Hierbei wird ein volatiles Objekt persistent, wenn es von einem persistenten Objekt referenziert wird, wobei ein persistentes Objekt nur durch eine Garbage Collection wieder volatil werden kann. Weder ein volatiles noch ein persistentes Objekt können wieder zu einem schnell-volatilen Objekt werden.

Schließlich kann die zweite Speicherverwaltungseinrichtung 46 auch Speicheranteile für native Elemente, z.B. einen Bytebuffer, dynamisch verwalten. Solche nativen Elemente können beispielsweise über Einträge in dafür vorgesehenen Listen referenziert werden. Fehlt ein solcher Eintrag, kann der entsprechende Speicheranteil direkt freigegeben werden.

## Patentansprüche

1. Verfahren zum dynamischen Verwaltender von Speicherressourcen (50), wobei erste Anteile (A1, A2, ..., An) der Speicherressourcen (50) durch eine erste Speicherverwaltung (44) dynamisch verwaltet werden und von den ersten Anteilen (A1, A2, ..., A*n*) verschiedene zweite Anteile (B1, B2, ..., B*n*) der Speicherressourcen (50) von einer von der ersten Speicherverwaltung (44) unabhängigen, für Stapelspeicher vorgesehenen zweiten Speicherverwaltung (46) dynamisch verwaltet werden, **dadurch gekennzeichnet, dass**
- die Speicherressourcen (50) die eines portablen Datenträgers (10) sind,
- die erste und zweite Speicherverwaltung durch zwei separate Speicherverwaltungseinrichtungen (44, 46) eines Betriebssystems (42) des Datenträgers (10) derart realisiert werden, dass erste (A1, A2, ..., A*n*) und zweite Anteile (B1, B2, ..., B*n*) von volatilen Speicherressourcen (50) des Datenträgers (10) jeweils ausschließlich von der ersten (44) oder zweiten Speicherverwaltungseinrichtung (46) dynamisch verwaltet werden,
- die erste Speicherverwaltungseinrichtung (44) und die zweite Speicherverwaltungseinrichtung (46) in eine Multithreading-fähige virtuelle Maschine des Betriebssystems (42) integriert sind und die Speicherressourcen (50) als Bestandteile einer Freispeicherverwaltung der Virtuellen Maschine dynamisch verwalten,
- die virtuelle Maschine zumindest einen Thread ausführt und die erste Speicherverwaltungseinrichtung (44) erste Anteile (A1, A2, ..., A*n*) der Speicherressourcen (50) für solche Objekte des zumindest einen Threads dynamisch verwaltet, die von anderen Objekten referenziert werden und/ oder andere Objekte referenzieren, und die zweite Speicherverwaltungseinrichtung (46) zweite Anteile (B1, B2, ..., B*n*) der Speicherressourcen (50) für Stapelspeicher der Objekte des zumindest einen Threads dynamisch verwaltet, und
- die zweite Speicherverwaltungseinrichtung (46) auch zweite Anteile (B1, B2, ..., B*n*) der Speicherressourcen (50) für solche Objekte des zumindest einen Threads dynamisch verwaltet, die nicht oder lediglich aus einem Stapelspeicher referenziert werden.

2. Verfahren nach Anspruch 1, **dadurch gekennzeichnet, dass** von einem ausgeführten Prozess während seiner Laufzeit angeforderte Speicherressourcen (50) von der ersten Speicherverwaltung (44) als erste Anteile (A1, A2, ..., A*n*) der Speicherressourcen (50) zugeteilt werden und dass die für einen Stapelspeicher des Prozesses angeforderten Speicherressourcen (50) von der zweiten Speicherverwaltung (46) als zweite Anteile (B1, B2, ..., B*n*) zugeteilt werden.

3. Verfahren nach Anspruch 2, **dadurch gekennzeichnet, dass** die zweite Speicherverwaltung (46) Speicherressourcen (50) für den Stapelspeicher in Form von Anteilen (B1, B2, ..., B*n*) der Speicherressourcen (50) konstanter Größe verwaltet.

4. Verfahren nach Anspruch 3, **dadurch gekennzeichnet, dass** die zweite Speicherverwaltung (46) Speicherressourcen (50) für den Stapelspeicher in Form von Anteilen (B1, B2, ..., B*n*) der Speicherressourcen (50) verwaltet, deren Größe jeweils der Größe eines auf dem Stapelspeicher abgelegten Methodenrahmens entspricht.

5. Verfahren nach einem der Ansprüche 1 bis 4, **dadurch gekennzeichnet, dass** die zweite Speicherverwaltungseinrichtung (46) die Verwaltung der zweiten Anteile (B1, B2, ..., B*n*) der Speicherressourcen (50) eines nicht oder lediglich aus einem Stapelspeicher referenzierten Objekts an die erste Speicherverwaltungseinrichtung (44) übergibt, wenn dieses Objekt von einem anderen Objekt referenziert wird.

6. Verfahren nach einem der Ansprüche 1 bis 5, **dadurch gekennzeichnet, dass** die zweite Speicherverwaltungseinrichtung (46) zweite Anteile (B1, B2, ..., B*n*) der Speicherressourcen (50) eines nativen Elements dynamisch verwaltet.

7. Portabler Datenträger (10), umfassend Speicherressourcen (50), einen Prozessor (30), ein Betriebssystem (42) mit einer ersten Speicherverwaltungseinrichtung (44) zur dynamischen Verwaltung von Speicherressourcen (50) sowie zumindest eine von dem Prozessor (30) als Prozess ausführbare Applikation (64) und eine von der ersten Speicherverwaltungseinrichtung (44) unabhängige zweite Speicherverwaltungseinrichtung (46) des Betriebssystems (42), wobei die erste Speicherverwaltungseinrichtung (44) eingerichtet ist, erste Anteile (A1, A2, ..., A*n*) der Speicherressourcen (50) dynamisch zu verwalten und die zweite Speicherverwaltungseinrichtung (46) eingerichtet ist, von den ersten Anteilen (A1, A2, ..., A*n*) verschiedene zweite Anteile (B1, B2, ..., B*n*) der Speicherressourcen (50) dynamisch zu verwalten, **dadurch gekennzeichnet, dass** die erste (44) und zweite Speicherverwaltungseinrichtung (46) eingerichtet sind, Speicherressourcen (50) gemäß einem Verfahren nach einem der Ansprüche 1 bis 6 dynamisch zu verwalten.

8. Datenträger (10) nach Anspruch 7, **dadurch gekennzeichnet, dass** der Datenträger als Chipkarte, sichere Multimediakarte, Mobilfunkkarte oder USB-Speichermedium ausgebildet ist.

## Claims

1. A method for dynamically managing memory resources (50), wherein first portions (A1, A2, ..., An) of the memory resources (50) are dynamically managed by a first memory management (44), and second portions (B1, B2, ..., Bn) different from the first portions (A1, A2, ..., An) of the memory resources (50) are dynamically managed by a second memory management (46) that is independent of the first memory management (44) and provided for stack memories, **characterized in that**
- the memory resources (50) are those of a portable data carrier (10),
- the first and second memory management are realized by two separate memory management devices (44, 46) of an operating system (42) of the data carrier (10) in such a fashion that first (A1, A2, ..., An) and second portions (B1, B2, ..., Bn) of volatile memory resources (50) of the data carrier (10) are dynamically managed in each case exclusively by the first (44) or the second memory management device (46),
- the first memory management device (44) and the second memory management device (46) are integrated in a multithread-capable virtual machine of the operating system (42) and dynamically manage the memory resources (50) as parts of a free memory management of the virtual machine,
- the virtual machine executes at least one thread and the first memory management device (44) dynamically manages first portions (A1, A2, ..., An) of the memory resources (50) for such objects of the at least one thread which are referenced by other objects and/ or reference other objects, and the second memory management device (46) dynamically manages second portions (B1, B2, ..., Bn) of the memory resources (50) for stack memories of the objects of the at least one thread, and
- the second memory management device (46) dynamically manages also second portions (B1, B2, ..., Bn) of the memory resources (50) for such objects of the at least one thread which are not referenced or referenced merely from a stack memory.

2. The method according to claim 1, **characterized in that** memory resources (50) requested by an executed process during its runtime are allocated by the first memory management (44) as first portions (A1, A2, ..., An) of the memory resources (50), and that the memory resources (50) requested for a stack memory of the process are allocated by the second memory management (46) as second portions (B1, B2, ..., Bn).

3. The method according to claim 2, **characterized in that** the second memory management (46) manages memory resources (50) for the stack memory in the form of portions (B1, B2, ..., Bn) of the memory resources (50) of constant size.

4. The method according to claim 3, **characterized in that** the second memory management (46) manages memory resources (50) for the stack memory in the form of portions (B1, B2, ..., Bn) of the memory resources (50), whose size respectively corresponds to the size of a method framework stored on the stack memory.

5. The method according to any of the claims 1 to 4, **characterized in that** the second memory management device (46) transfers the management of the second portions (B1, B2, ..., Bn) of the memory resources (50) of an object that is not referenced or referenced merely from a stack memory to the first memory management device (44) when said object is referenced by a different object.

6. The method according to any of the claims 1 to 5, **characterized in that** the second memory management device (46) dynamically manages second portions (B1, B2, ..., Bn) of the memory resources (50) of a native element.

7. A portable data carrier (10), comprising memory resources (50), a processor (30), an operating system (42) with a first memory management device (44) for dynamically managing memory resources (50) as well as at least one application (64) executable as a process by the processor (30) and a second memory management device (46) independent of the first memory management device (44) of the operating system (42), wherein the first memory management device (44) is set up to dynamically manage first portions (A1, A2, ..., An) of the memory resources (50), and the second memory management device (46) is set up to dynamically manage second portions (B1, B2, ..., Bn) different from the first portions (A1, A2, ..., An) of the memory resources (50), **characterized in that** the first (44) and the second memory management device (46) are set up to dynamically manage memory resources (50) in accordance with a method according to any of the claims 1 to 6.

8. The data carrier (10) according to claim 7, **characterized in that** the data carrier is configured as a chip card, secure multimedia card, mobile communication card or USB memory medium.

## Revendications

1. Procédé de gestion dynamique de ressources de mémoire (50), des premières fractions (A1, A2, ..., A*n*) des ressources de mémoire (50) étant gérées dynamiquement par une première gestion de mémoire (44) et des deuxièmes fractions (B1, B2, ..., B*n*) des ressources de mémoire (50) différentes des premières fractions (A1, A2, ..., An) étant gérées dynamiquement par une deuxième gestion de mémoire (46) indépendante de la première gestion de mémoire (44) et prévue pour mémoire pile, **caractérisé en ce que**
- les ressources de mémoire (50) sont celles d'un support de données portable (10),
- la première et deuxième gestion de mémoire sont réalisées de telle sorte par deux dispositifs de gestion de mémoire (44, 46) distincts d'un système d'exploitation (42) du support de données (10) que des premières (A1, A2, ... , A*n*) et des deuxièmes fractions (B1, B2, ... , B*n*) de ressources volatiles de mémoire (50) du support de données (10) sont respectivement gérées dynamiquement exclusivement par le premier (44) ou deuxième dispositif de gestion de mémoire (46),
- le premier dispositif de gestion de mémoire (44) et le deuxième dispositif de gestion de mémoire (46) sont intégrés dans une machine virtuelle multithread du système d'exploitation (42) et gèrent dynamiquement les ressources de mémoire (50) en tant que parties constituantes d'une gestion de mémoire libre de la machine virtuelle,
- la machine virtuelle exécute au moins un thread et le premier dispositif de gestion de mémoire (44) gère dynamiquement des premières fractions (A1, A2, ..., A*n*) des ressources de mémoire (50) pour des objets du au moins un thread qui sont tels qu'ils sont référencés par d'autres objets et/ou qu'ils référencient d'autres objets, et le deuxième dispositif de gestion de mémoire (46) gère dynamiquement des deuxièmes fractions (B1, B2, ..., B*n*) des ressources de mémoire (50) pour mémoires piles des objets du au moins un thread, et
- le deuxième dispositif de gestion de mémoire (46) gère dynamiquement aussi des deuxièmes fractions (B1, B2, ..., Bn) des ressources de mémoire (50) pour des objets du au moins un thread qui sont tels qu'ils ne sont pas référencés ou qu'ils ne le sont qu'à partir d'une mémoire pile.

2. Procédé selon la revendication 1, **caractérisé en ce que** des ressources de mémoire (50) sollicitées par un processus exécuté durant son temps d'exécution sont affectées en tant que premières fractions (A1, A2, ..., A*n*) des ressources de mémoire (50) par la première gestion de mémoire (44) et **en ce que** les ressources de mémoire (50) sollicitées pour une mémoire pile du processus sont affectées en tant que deuxièmes fractions (B1, B2, ..., B*n*) par la deuxième gestion de mémoire (46).

3. Procédé selon la revendication 2, **caractérisé en ce que** la deuxième gestion de mémoire (46) gère des ressources de mémoire (50) pour la mémoire pile sous forme de fractions (B1, B2, ..., B*n*) des ressources de mémoire (50) de grandeur constante.

4. Procédé selon la revendication 3, **caractérisé en ce que** la deuxième gestion de mémoire (46) gère des ressources de mémoire (50) pour la mémoire pile sous forme de fractions (B1, B2, ..., B*n*) des ressources de mémoire (50) dont la grandeur correspond respectivement à la grandeur d'un cadre méthode stocké dans la mémoire pile.

5. Procédé selon une des revendications de 1 à 4, **caractérisé en ce que** le deuxième dispositif de gestion de mémoire (46) transmet la gestion des deuxièmes fractions (B1, B2, ..., B*n*) des ressources de mémoire (50) d'un objet non référencé ou ne l'étant qu'à partir d'une mémoire pile au premier dispositif de gestion de mémoire (44) quand cet objet est référencé par un autre objet.

6. Procédé selon une des revendications de 1 à 5, **caractérisé en ce que** le deuxième dispositif de gestion de mémoire (46) gère dynamiquement des deuxièmes fractions (B1, B2, ..., B*n*) des ressources de mémoire (50) d'un élément natif.

7. Support de données portable (10), comprenant des ressources de mémoire (50), un processeur (30), un système d'exploitation (42) comportant un premier dispositif de gestion de mémoire (44) destiné à la gestion dynamique de ressources de mémoire (50) ainsi qu'au moins une application (64) exécutable en tant que processus par le processeur (30) et un deuxième dispositif de gestion de mémoire (46), indépendant du premier dispositif de gestion de mémoire (44), du système d'exploitation (42), le premier dispositif de gestion de mémoire (44) étant configuré pour gérer dynamiquement des premières fractions (A1, A2, ..., A*n*) des ressources de mémoire (50) et le deuxième dispositif de gestion de mémoire (46) étant configuré pour gérer dynamiquement des deuxièmes fractions (B1, B2, ..., B*n*) des ressources de mémoire (50) différentes des premières fractions (A1, A2, ..., A*n*), **caractérisé en ce que** le premier (44) et deuxième dispositif de gestion de mémoire (46) sont configurés pour gérer dynamiquement des ressources de mémoire (50) conformément à un procédé selon une des revendications de 1 à 6.

8. Support de données (10) selon la revendication 7, **caractérisé en ce que** le support de données est réalisé sous forme de carte à puce, de carte multimédia sécuritaire, de carte de téléphonie mobile ou de support mémoire USB.
